# EUROPEAN PATENT APPLICATION

(11) **EP 4 836 222 A1**
(43) Date of publication of application: **04.11.2026**
(21) Application number: 25173117.0
(22) Date of filing: 29.04.2025
(51) Int. Cl.: H02J 3/18, H02M 1/00, H02M 7/797, H02J 3/32

(54) **A CONTROL DEVICE, POWER SUPPORTING SYSTEM, AND METHOD FOR CONTROLLING A VOLTAGE SOURCE CONVERTER**

(71) Applicant: Hitachi Energy Ltd, 8050 Zürich (CH)
(72) Inventor: Ranjan Bana, Prabhat, 72359 Västerås (SE); Heydari, Rasool, 722 26 Västerås (SE); Hasler, Jean-Philippe, 72244 Västerås (SE); Danielsson, Christer, 72591 Västerås (SE)
(74) Representative: AWA Sweden AB

(57) **Abstract**

According to an aspect of the present disclosure there is provided a control device (100) for a voltage source converter, VSC, electrically connected to an electrical power system via a point of common connection, PCC, wherein the control device (100) is configured to provide a voltage reference (U_{ref}) to the VSC for controlling the VSC in a Static Synchronous Compensator, STATCOM, mode or an Enhanced STATCOM, ESTATCOM, mode, wherein the voltage reference (U_{ref}) is based at least on a phase angle of an internal voltage source, IVS, of the VSC, wherein the IVS phase angle (*ϕ_{IVS}*) is at least indicative of an amount of active power (P) being exchanged between the VSC and the electrical power system via the PCC, the control device (100) comprising: a power control loop (110) configured to determine the IVS phase angle (*ϕ_{IVS}*) based at least on a feedforward damping of an energy parameter, wherein the power control loop (110) is further configured to operate in a first mode corresponding to the STATCOM mode of the VSC, or operate in a second mode corresponding to the ESTATCOM mode of the VSC, wherein in the first mode the power control loop (110) is configured to obtain a direct current, DC, link energy (ΔW_{DC}) as the energy parameter, wherein the DC link energy (ΔW_{DC}) is indicative of an amount of electrical energy being exchanged between a DC link energy source of the VSC and the electrical power system, wherein in the second mode the power control loop (110) is configured to obtain an estimated energy (ΔW_{P}) as the energy parameter, wherein the estimated energy (ΔW_{P}) corresponds to an active power correction (ΔP) based at least on the active power (P), an active power reference (P_{ref}) for the active power (P), and an active power reference correction (ΔP_{ref}) based at least on an energy correction (ΔW), wherein the energy correction (ΔW) is based at least on the estimated energy (ΔW_{P}) and the direct current, DC, link energy (ΔW_{DC}).

## Description

### Technical field

The present disclosure relates to the field of power systems and electrical engineering. Specifically, the present disclosure relates to the synchronization and control of grid-forming converters and voltage source converters (VSCs) in power systems.

### Background

The global transition towards a renewable-based power system is leading to the replacement of traditional synchronous generation with converter-interfaced generation. Grid-forming (GFM) converters have emerged as the preferred solution to address the challenges associated with this shift. These converters typically utilize their DC-side energy for grid synchronization, enabling them to function as voltage sources.

Over time, GFM strategies have evolved from merely offering basic reactive power support to actively shaping grid voltage and responding to variations in grid voltage phase angle and frequency. Additionally, VSCs must operate and support the grid even under extremely low short-circuit power conditions, such as during grid restoration. This requirement necessitates the integration of additional energy storage systems (ESS), such as supercapacitors and battery energy storage systems (BESS), to complement the limited energy available in the DC leg capacitors for grid stabilization. In this context, the synchronization control of VSCs must be resilient and capable of delivering critical damping services to ensure reliable operation.

A wide range of synchronization methods have been developed for inverter-based resources (IBRs). Initially, research focused on rejecting disturbances such as voltage harmonics, imbalances, phase jumps, and frequency deviations. However, the focus has shifted towards ensuring synchronization stability in weak and faulty grids. This shift is driven by the increasing share of IBRs in the power system, which leads to decreased inertia and lower short-circuit ratios (SCR), ultimately compromising the stability of these resources. Furthermore, conventional synchronization methods for GFM converters face angular stability issues during large frequency disturbances and lack essential GFM properties.

Hence, there is a need for an improved solution that alleviates at least some problems of conventional solutions.

### Summary

An objective of the present disclosure is to provide a control device, power supporting system, and method for controlling a VSC that alleviates at least some drawbacks with present solutions or improves over present solutions in at least one aspect or provides an alternative over present solutions in at least one aspect. Further, an object is to preferably enhance stability and reliability of grid-forming converters in power systems.

Another objective of this disclosure is to preferably provide an improved control device for a voltage source converter, enabling efficient and stable operation in an electrical power system.

These and other objectives are at least partly met by the invention as defined in the independent claims. Preferred embodiments are set out in the dependent claims. Additional advantageous exemplary embodiments are described in the following.

According to a first aspect, a control device for a voltage source converter, VSC, is provided. The VSC is electrically connected to an electrical power system via a point of common connection, PCC. The control device is configured to provide a voltage reference to the VSC for controlling the VSC in a Static Synchronous Compensator, STATCOM, mode or an Enhanced STATCOM, ESTATCOM, mode. The voltage reference is based at least on a phase angle of an internal voltage source, IVS, of the VSC, wherein the IVS phase angle is at least indicative of an amount of active power being exchanged between the VSC and the electrical power system via the PCC. The control device comprises: a power control loop configured to determine the IVS phase angle based at least on a feedforward damping of an energy parameter. The power control loop is further configured to operate in a first mode corresponding to the STATCOM mode of the VSC, or operate in a second mode corresponding to the ESTATCOM mode of the VSC. In the first mode the power control loop is configured to obtain a direct current, DC, link energy as the energy parameter, wherein the DC link energy is indicative of an amount of electrical energy being exchanged between a DC link energy source of the VSC and the electrical power system. In the second mode the power control loop is configured to obtain an estimated energy as the energy parameter, wherein the estimated energy corresponds to an active power correction based at least on the active power, an active power reference for the active power, and an active power reference correction. The active power reference correction is based at least on an energy correction. The energy correction is based at least on the estimated energy and the DC link energy.

In other words, the method may consider DC-link energy and optionally AC-side energy (estimated from the power) to generate a synchronization angle depending on mode of operation (STATCOM or ESTATCOM). The method hence provides a robust power synchronizing solution to VSCs, allowing VSCs to dampen oscillations and converge to a steady state faster.

Further, the control device provides damping in a feed-forward manner, unlike feed-back concepts in conventional methods. Hence, there is no need for an additional loop or circuit for providing dampening. In addition, the power control loop, specifically the energy correction, ensures that an energy error always converges to zero. This combination enables enhanced damping and angular stability to be achieved even during transient conditions.

In yet other words, the method also enables VSCs to achieve faster and more effective damping following transient events, thus ensuring system and controller stability.

Hereby, efficient control of the VSC is facilitated. The method enables precise management of active power exchange with the electrical power system. The power control loop enables real-time adjustments to be made, ensuring stable operation and minimizing potential disturbances in the electrical power system.

The power control loop of the control device further enables accurate calculation of the phase angle correction, considering both the source phase angle and the IVS phase angle. The energy balancing circuit allows for any deviations in energy exchange to be addressed and/or compensated for, hence maintaining system stability. In other words, the energy balancing circuit enables the system to remain stable and operate within predetermined limits, even in the presence of disturbances or errors.

The energy correction being based at least on the DC link energy and the estimated energy enables the control device to account for changes also in DC link energy, e.g., ensuring that the VSC operates within predetermined limits. By incorporating both the DC link energy and the estimated energy into the energy correction calculation, the control device enables a comprehensive understanding of the energy dynamics.

Furthermore, the method enables elimination of harmonics introduced by cell DC voltages without any need for any additional control logic. Specifically, the method removes inherent 2nd order harmonics from cell DC voltages and maintains energy balance among energy storage systems and grids without requiring additional control mechanisms.

The control device controlling the VSC based at least on the phase angle correction facilitates precise operational control of the VSC. By utilizing the phase angle correction, the control device can ensure that the VSC operates in smoothly with the electrical power system, e.g., minimizing potential disruptions and ensuring reliable energy exchange.

The control device may be a power controller, for example, the control device may be a power synchronization controller.

Generally, the method enables a robust power controller with inherent frequency and damping control, as well as an improved GFM control structure that eliminates the need for additional synchronization loops.

Further, the method enables improved system stability, enhanced performance, and increased efficiency. By providing a robust power synchronizing solution, the method enables VSCs to operate effectively in various applications, ensuring reliable and stable operation of the electrical power system. This may facilitate adoption of VSCs in diverse industries, e.g., contributing to the development of more efficient and sustainable energy systems.

The active power being exchanged between the VSC and the electrical power system via the PCC may be determined from current and voltage measurements at the PCC. A current at the PCC (or elsewhere) may be measured by means of a current transformer (CT). A voltage at the PCC (or elsewhere) may be measured by means of a voltage transformer (VT). The current and the voltage may be represented as phasors, respectively. The active power may be determined as the voltage multiplied with the current and a power factor (the cosine of a phase angle between voltage and current). The voltage and current multiplied with the power factor may be root-mean-square, RMS, values.

The power control loop may be configured to obtain an active power reference correction via an energy balancing circuit, the energy balancing circuit being configured to determine the active power reference correction based at least on an energy correction.

The power control loop may be configured to determine an active power correction based at least on the active power, the active power reference, and the active power reference correction.

The power control loop may be configured to determine an estimated energy corresponding to the active power correction.

The power control loop may be configured to determine a phase angle correction based on a difference between a source phase angle and an internal voltage source, IVS, phase angle, wherein the source phase angle is a phase angle of the electrical power system, and the IVS phase angle is based at least on a feedforward damping of the estimated energy. The energy correction is based at least on the estimated energy and a direct current, DC, link energy indicative of an amount of electrical energy being exchanged between a DC link energy source and the electrical power system. The control device may be configured to control the VSC based at least on the phase angle correction.

According to one embodiment, the active power reference correction is based at least on a difference between the DC link energy and the energy correction scaled by an integral energy gain. The active power reference correction may be provided via the energy balancing circuit.

The energy balancing circuit may be configured to correct or maintain an energy balance between the DC link energy and the estimated energy. The energy balancing circuit may correct or maintain the energy balance between the DC link energy and the estimated energy via the active power reference correction.

In a non-limiting example, the difference between the DC link energy and the estimated energy may be the energy correction.

By determining the power reference correction based on the difference between the DC link energy and the estimated energy, precise calculation of the active power reference correction is enabled. In other words, the difference between the DC link energy and the estimated energy may provide an energy correction term. The energy correction may mitigate mismatches in energy from the DC-side and energy sent to grid. Further, scaling the energy correction by the integral energy gain, enables the control device to adjust the active power reference correction over time, e.g., ensuring that the VSC operates within predetermined limits. Energy unbalance may occur due to discrepancies between a theoretical energy, e.g., calculated based on parameters such as the system inertia constant (H) and frequency deviation (*Δω*), and an actual energy stored in the ESS.

According to one embodiment, the IVS phase angle is based at least on a proportional part of the IVS phase angle provided by a feedforward damping circuit, which feedforward damping circuit is configured to receive the energy parameter as input. The energy parameter may depend on the mode of the power control loop. In the first mode, the energy parameter may be the DC link energy. In the second mode, the energy parameter may be the estimated energy.

This facilitates more accurate adjustment of the IVS phase angle in response to changes in the estimated energy, enabling the VSC to respond quickly to changes in the electrical power system. The use of the feedforward damping circuit allows for further precise control over the IVS phase angle, ensuring that the VSC operates in harmony with the electrical power system.

Generally, the use of feed-forward damping allows for a simpler definition and understanding of the damping phenomena, e.g., enabling more effective control. Further, the damping achieved through a feed-forward approach is relatively more effective than conventional feedback-based damping mechanisms. Additional, feedback control for damping can be challenging to integrate with power limiters, thus feed-forwarding may be a preferable approach in applications where power limiting is required.

According to one embodiment, the proportional part of the IVS phase angle is based at least on the energy parameter scaled by a proportional gain.

In other words, the control device may adjust the proportional part of the IVS phase angle in response to changes in the energy parameter. Implementing a proportional gain may provide a faster response. The use of a proportional gain may enable the control device to fine-tune the proportional part of the IVS phase angle, e.g., ensuring that the VSC operates within predetermined limits.

The proportional gain may define the damping characteristics of the control device. Specifically, the proportional gain is related to the damping part of the IVS phase angle, and adjusting this gain can directly impact the amount of damping achieved. A higher proportional gain can provide more damping. However, if the proportional gain is chosen too high, it can lead to an over-damped system. Therefore, the proportional gain may be tuned to achieve a preferable balance between damping and stability, as will be further explained herein.

According to one embodiment, the IVS phase angle is further based on an integral part of the IVS phase angle. The integral part of the IVS phase angle may be provided by an integrating circuit, which integrating circuit is configured to receive the energy parameter as input.

Hence, long-term adjustments may be made to the IVS phase angle. The integral part may enable the control device to account for cumulative changes in the energy parameter, e.g., ensuring that the VSC operates within predetermined limits.

The integral part may serve as a mechanism to track the system frequency and regulate the converter frequency, e.g., ensuring that any deviations or disturbances in the frequency are corrected. The integral part enables the control device to accurately track changes in the system frequency and make necessary adjustments to maintain stability. On the other hand, the proportional part provides damping to the system, e.g., helping to mitigate oscillations and stabilize the response to frequency disturbances. Hence, the combination of the integral and proportional parts of the IVS phase angle allows the controller to effectively correct frequency errors and provide a stable output. In other words, the integral part may ensure accurate tracking and correction of frequency changes, and the proportional part may contribute to the overall damping and stability of the system.

In a non-limiting example, the proportional part of the IVS phase angle and the integral part of the IVS phase angle gets summed up to generate a final phase angle correction for the IVS. Further, the DC voltage may be used to estimate the available energy, i.e., DC link energy. The DC link energy may consequently be compared with the estimated energy to compute the phase angels as discussed above.

According to one embodiment, the integral part of the IVS phase angle is determined by an integral gain followed by an energy integrator.

This facilitates precise calculation of the integral part of the IVS phase angle, utilizing both integral gain and an energy integrator. The use of an integral gain enables the control device to adjust the integral part of the IVS phase angle over time, ensuring that the VSC operates within predetermined limits. The integral gain may track the system frequency. Further, the integral gain may ultimately define the inertia of the system.

According to one embodiment, the IVS phase angle is based at least on a sum of the proportional part of the IVS phase angle and the integral part of the IVS phase angle.

This facilitates a more accurate and stable control of the power controller.

According to one embodiment, the control device further comprises an alternating current voltage controller, AVC, configured to regulate an AC voltage output of the VSC. The AVC may (indirectly) control reactive power being exchanged between the VSC and the electrical power system via the PCC by regulating the AC voltage output.

By regulating the reactive power, the AVC helps to stabilize the voltage output of the VSC, e.g., ensuring that it remains within desired limits.

Hence, the AVC may enhance an ability of the VSC to support grid stability, such as in conditions where voltage fluctuations are may occur. Additionally, the regulation of reactive power may improve efficiency of power distribution.

According to one embodiment, the AVC provides a magnitude voltage based on a reactive power measured at the PCC and a reactive power reference for said reactive power.

In other words, the AVC may determine the magnitude of the voltage it provides based on the reactive power measured at the PCC, and a predefined reactive power reference. The reactive power reference may serve as a target or benchmark for a desired reactive power level. By comparing the measured reactive power at the PCC with this reference, the AVC can adjust the voltage magnitude accordingly to ensure ideal performance and stability of the VSC.

The reactive power measured at the PCC may be measured indirectly via voltage and current measurements at the PCC. The reactive power may be determined as the voltage multiplied with the current and a sine of a phase angle between voltage and current. The voltage and current multiplied with the sine of the phase angle may be root-mean-square, RMS, values.

According to one embodiment, the control device is further configured to determine an electromotive force, EMF, based on the IVS phase angle and the magnitude voltage.

In other words, by using the IVS phase angle along with the voltage magnitude, the control device may derive the EMF. The determined EMF may represent a measure of the energy conversion capability of the VSC.

Hereby, robust operation of the VSC may be provided, e.g., by ensuring that the EMF is aligned with grid requirements.

According to one embodiment, the voltage reference is further based on the EMF and a virtual admittance determined by a virtual admittance controller, VAC.

In other words, the virtual admittance controller may be configured to regulate an output impedance of the VSC. The output impedance of the VSC may be regulated based on the virtual impedance.

In a sense, the VAC may be designed to reshape an effective impedance of the VSC to provide good and/or sufficient damping.

According to one embodiment, the voltage reference is further based on a current limit of a current between the VSC and the electrical power system. The current may be a current conducting between the VSC and the electrical power system via the PCC.

The use of a current limit, i.e., current limitation, enables the control device to prevent excessive currents from flowing between the VSC and the electrical power system, protecting the VSC and the electrical power system from potential damage. In other words, the current limit may prevent the VSC from being operated above a maximum allowed current threshold. In an example, the control device may implement specific current limitation means to provide additional current limitation safeguards, e.g., such as a current limitation unit configured to limit current propagating between the VSC and the PCC.

This may further facilitate current limitation of the VSC, thereby protecting sensitive power electronics of the VSC without resorting to tripping functionality that may compromise the VSC's grid-forming capability. As an example, the maximum allowed current threshold may be specified by a current limit reference. A current limiting unit may be configured to receive said current reference and provide a processed current reference to a current controller.

According to one embodiment, the control device is configured to control the VSC via at least the voltage reference to the VSC. The VSC may be a VSC configured to provide power support (active power support and/or reactive power support) to an electrical power system, such as an electrical power network. The electrical power system may be configured for high voltage, HV, application and/or medium voltage, MV, application, and/or low voltage, LV, application.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts. HV may however refer to electrical voltage levels equal to or greater than 115 kV.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads. MV may however refer to electrical voltage levels equal to or greater than 10 kV but less than 66 kV (and HV being equal to or greater than 66 kV).

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries. However, LV may refer to 1000V or less (in which case MV is at least greater than 1000V but less than 35 kV or 66 kV).

According to a second aspect of the present disclosure, a power supporting system is provided. The power supporting system comprises: a grid-forming converter configured to be electrically connected to an electrical power system via a point of common connection, PCC, and a control device according to the first aspect or any embodiments thereof.

This facilitates the creation of a comprehensive power supporting system that can efficiently manage the flow of electrical energy between the grid-forming converter and the electrical power system. The control device enables precise control over the operation of the grid-forming converter, ensuring stable and efficient performance.

Specifically, the grid-forming converter may generate a voltage and frequency that supports the electrical power system, while the control device regulates a power exchange between the VSC and the electrical power system.

The power supporting system may comprise a plurality of VSC. The control device may be configured to control the plurality of VSC individually. A VSC may be electrically connected or connectable to a renewable energy source.

The second aspect may generally present the same or corresponding advantages as the first aspect.

According to one embodiment, the VSC of the power supporting system is configured to electrically connect to an energy storage system (ESS) and/or operate as a static synchronous compensator (STATCOM). When electrically connected to the ESS, the converter is configured to charge or discharge the ESS to supply active power to the electrical power network or absorb excess power. When operating as a STATCOM, the converter is configured to provide reactive power compensation by injecting or absorbing reactive power to regulate the voltage at the PCC. The converter may be configured to seamlessly transition between ESS and STATCOM operation modes based on network conditions, thereby enhancing grid stability, supporting voltage regulation, and improving power quality. Particularly, the converter may be configured to operate as an E-STATCOM (Enhanced STATCOM) by providing both reactive power support and active power support via the ESS.

According to a third aspect of the present disclosure, a method for controlling a voltage source converter, VSC, is provided. The VSC is electrically connected to an electrical power system via a point of common connection, PCC. The method comprises providing a voltage reference to the VSC for controlling the VSC in a Static Synchronous Compensator, STATCOM, mode or an Enhanced STATCOM, ESTATCOM, mode. The voltage reference is based at least on a phase angle of an internal voltage source, IVS, of the VSC, wherein the IVS phase angle is at least indicative of an amount of active power being exchanged between the VSC and the electrical power system via the PCC. The method further comprises: determining, via a power control loop, the IVS phase angle based at least on a feedforward damping of an energy parameter; operating the power control loop in a first mode corresponding to the STATCOM mode of the VSC or operating the power control loop in a second mode corresponding to the ESTATCOM mode of the VSC. In the first mode the power control loop obtains a direct current, DC, link energy as the energy parameter, wherein the DC link energy is indicative of an amount of electrical energy being exchanged between a DC link energy source of the VSC and the electrical power system. In the second mode the power control loop obtains an estimated energy as the energy parameter, wherein the estimated energy corresponds to an active power correction based at least on the active power, an active power reference for the active power, and an active power reference correction based at least on an energy correction. The energy correction is based at least on the estimated energy and the direct current, DC, link energy.

This aspect may generally present the same or corresponding advantages as the former aspects.

The method may comprise obtaining, via the power control loop, an active power reference correction via an energy balancing circuit, the energy balancing circuit determining the active power reference correction based at least on an energy correction.

The method may comprise determining, via the power control loop, an active power correction based at least on an active power, an active power reference, and the active power reference correction.

The method may comprise determining, via the power control loop, an estimated energy corresponding to the active power correction.

The method may comprise determining, via the power control loop, a phase angle correction based on a difference between a source phase angle and an internal voltage source, IVS, phase angle. The source phase angle may be a phase angle of the electrical power system. The IVS phase angle may be based at least on a feedforward damping of the estimated energy.

The method may comprise controlling the VSC based at least on the phase angle correction. The energy correction may be based at least on the estimated energy and a direct current, DC, link energy indicative of an amount of electrical energy being exchanged between a DC link energy source and the electrical power system.

According to a fourth aspect, a computer-readable storage medium is provided. The computer-readable storage medium comprises instructions which, when executed by a computer, cause the computer to carry out the method according to the third aspect.

This aspect may generally present the same or corresponding advantages as the former aspects.

Effects and features of the first, second, third, and fourth aspects are largely analogous. Examples mentioned in relation to the first, second, and third aspects are largely compatible. It is further noted that the disclosure relates to all possible combinations of features unless explicitly stated otherwise.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.
Fig. 1 schematically illustrates a block diagram of a control device for a voltage source converter,
Fig. 2 schematically illustrates a block diagram of a grid forming control scheme, and
Fig. 3 illustrates a flowchart of a method for controlling a voltage source converter.

### Detailed description

Hereinafter, the principle of the present disclosure will be described with reference to illustrative embodiments. All these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

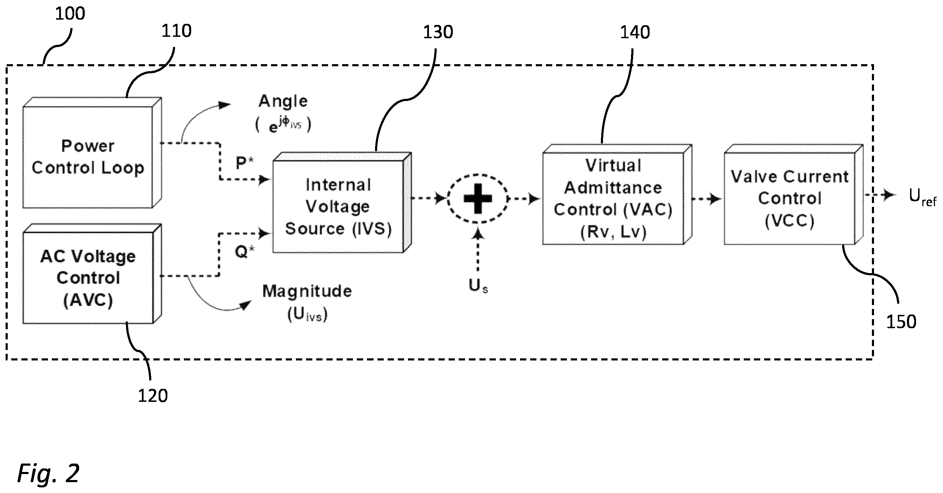

The present disclosure is based on the inventor's realization that grid-connected voltage source converter (VSC) systems can be modeled through an internal voltage source (IVS) 130 followed by the virtual admittance (*Yᵥ*), e.g., as further presented in Fig. 2. In a sub-synchronous frequency range, e.g., up to 50 Hz, VSC current may follow a reference current obtained from a virtual admittance controller (VAC) 140. Consequently, an apparent power (S) may be represented as: $S = {U}_{s} {I}_{s}^{∗} = {U}_{s} {Y}_{v}^{∗} \left({U}_{s}-{U}_{ivs}\right) = {Y}_{v}^{∗} \left\{{U}_{s}^{2}-{U}_{s}{U}_{ivs}{e}^{j \left({φ}_{s}-{φ}_{ivs}\right)}\right\}$ (1) where ***Uₛ*** and ***Iₛ*** are the PCC voltage and current, *φₛ* and *φᵢᵥₛ* are the phase angles of ***Uₛ*** and ***Uᵢᵥₛ,*** and *j* is the imaginary unit.

The expression of Eq. (1) may be linearized as follows: $d S = {Y}_{v}^{∗} \left[\begin{matrix}2 {U}_{s 0} {dU}_{s} - {U}_{s 0} {U}_{ivs 0} {e}^{j \left({φ}_{s 0}-{φ}_{ivs 0}\right)} j \left({dφ}_{s}-{dφ}_{ivs}\right) - \\ {U}_{s 0} {dU}_{ivs} {e}^{j \left({φ}_{s 0}-{φ}_{ivs 0}\right)} - {dU}_{s} {U}_{ivs 0} {e}^{j \left({φ}_{s 0}-{φ}_{ivs 0}\right)}\end{matrix}\right]$ (2)

The virtual admittance ***Yᵥ*** may generally be frequency dependent. However, for a relatively low frequency and a relatively small variation in nominal frequency, ***Yᵥ*** can be considered as frequency invariant and may be expressed as: $\left.{Y}_{v}\right| \left(s={jω}_{1}\right) = \frac{1}{{R}_{v} + {jω}_{1} {L}_{v}} = {G}_{v} + {jB}_{v}$ (3)

In an example, assuming in steady-state that *φ*_{*s*0} *= φ*_{*ivs*0}*, U*_{*ivs*0} *=* 1 *pu* and defining *U*_{*s*0}*Gᵥ = k_{G}*; *U*_{*s*0}*Bᵥ = k_{B},* the linearized expression in Eq. (2) can be decomposed into real and imaginary components. The real and imaginary components may then be expressed in terms of active and reactive output power relative to the grid voltage magnitude and phase angle, as follows: $\left[\begin{matrix}dP \\ dQ\end{matrix}\right] = \left[\begin{matrix}- {k}_{B} & - {k}_{G} \\ {k}_{G} & - {k}_{B}\end{matrix}\right] \left[\begin{matrix}{dφ}_{s} - {dφ}_{ivs} \\ {dU}_{s} - {dU}_{ivs}\end{matrix}\right] = \left[\begin{matrix}- {k}_{B} & - {k}_{G} \\ {k}_{G} & - {k}_{B}\end{matrix}\right] \left[\begin{matrix}Δφ \\ ΔU\end{matrix}\right]$ (4)

From the expression in Eq. (4), an open-loop transfer function for the power loop, without filter dynamics, can be written as: $p = - {k}_{B} \left({ϕ}_{s}-{ϕ}_{ivs}\right)$ (5)

Further, it is a realization that a control device may operate based on the principle that the power response (*P*) is proportional to the time derivative of frequency (*ω*). In other words, the energy (*W*) is proportional to the frequency deviation. This can be mathematically represented as: $\frac{2 H}{{ω}_{1}} \frac{dω}{dt} = P ⇒ Δω = \frac{{ω}_{1}}{2 H} \int Pdt = \frac{{ω}_{1} W}{2 H}$ (6)

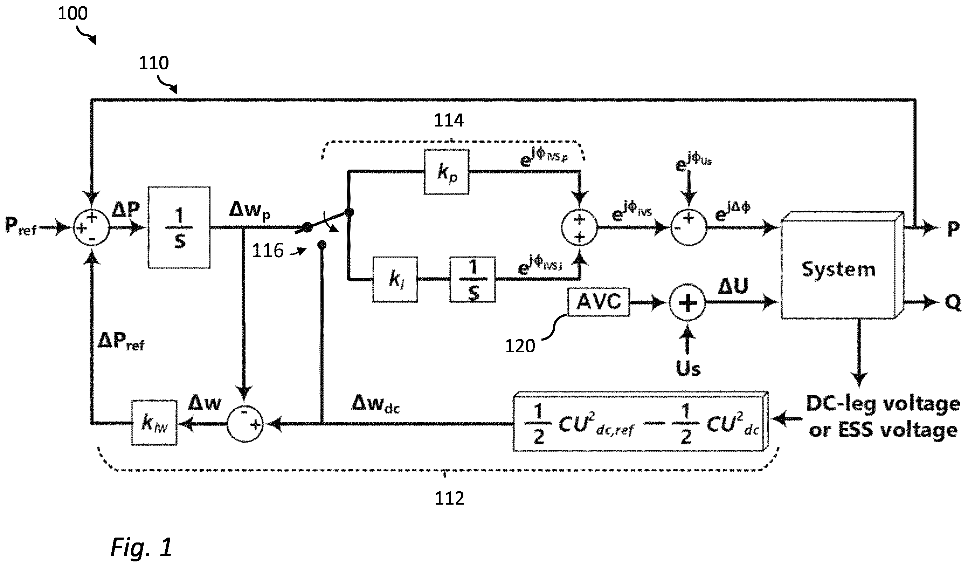

In line with the above expression in Eq. (6), it can be realized that a control device of a VSC can be designed by incorporating two integrators where the first integrator may be used to convert the power to energy and the second integrator may be used to determine the frequency of the IVS. The realization of this concept is further presented in the form of a schematic block diagram in Fig. 1.

Further, to correct and/or maintain the energy balance between an energy storage system and an actual energy calculated from an AC side power, an energy balancer loop with integral gain (*K_{iw}*) may be employed, e.g., as depicted in Fig. 1. Consequently, the expression for the IVS phase angle may be represented as: ${ϕ}_{ivs} = \frac{P}{s} \left({K}_{p}+\frac{{K}_{i}}{s}\right)$ (7)

Substituting the expression of Eq. (7) into Eq. (5), the transfer function, G(s), can be represented as standard second order equation as follows: $G \left(s\right) = \frac{P}{{ϕ}_{s}} = \frac{- {s}^{2} {k}_{B}}{\left({s}^{2}+2{ξω}_{n}s+{ω}_{n}^{2}\right)}$ (8) where 2ξ*ωₙ = k_{B}Kₚ* and ${ω}_{n}^{2} = {k}_{B} {K}_{i}$; and *ωₙ* is the natural frequency of oscillation and ξ is damping factor.

Considering the steady-state power error from (8) and comparing with Eq. (6), the expression of the proportional-integral gains *Kₚ* and *Kᵢ* can be obtained as: ${K}_{p} = ξ \sqrt{- \frac{2}{{k}_{B}} ⋅ \frac{{ω}_{1}}{H}} and {K}_{i} = \frac{{ω}_{1}}{2 H}$ (9)

Notably, the same concept may also be used to obtain the phase angle in the case of VSC without energy storage system. Consequently, the control device may effectively dampen and avoid any interference of second order harmonics from cell DC voltages. However, in that case, the expression of Eq. (6) would not be valid as it can only contribute with a minimal inertial power. However, the proportional-integral gains, *K_{p,Edc}* and *K_{i,Edc}*, may then be obtained from Eq. (8) as: ${ω}_{n}^{2} = - {k}_{B} {K}_{iEdc} \to {K}_{iEdc} = - \frac{{ω}_{n}^{2}}{{k}_{B}} ; {K}_{p , Edc} = - \frac{2 {ξω}_{n}}{{k}_{B}}$ (10)

Further, the AVC of the VSC depicted in Fig. 2 determines the magnitude of the IVS. Depending on a requirement, the AVC may be based on a reactive power set point, *Q_{ref}* or a bus voltage. However, the AVC may also be coupled with VAC values and may naturally behave as an integrator, which can be represented as: $Q \left(s\right) = \frac{{Q}_{ref} - {Q}_{1}}{{sT}_{qi}} \left(-{k}_{B}\right) ⇒ \frac{Q}{{Q}_{ref}} = \frac{{ω}_{Q}}{s + {ω}_{Q}}$ (11) where *T_{qi}* is the time constant and *ω_{Q}* is the bandwidth that represents the ratio of *k_{B}* and *T_{qi}*.

Notably, the grid frequency may define the energy (W). The relationship between energy and frequency may be given by 2*H ·* Δ*ω*, where H represents the inertia of the system. Furthermore, the integral gain (Kᵢ) or time constant (*T_{qi}*) may define the value of the inertia (*H*).

In line with the above, Fig. 1 depicts a schematic block diagram of a control device 100 for a voltage source converter, VSC, electrically connected to an electrical power system via a point of common connection, PCC, wherein the control device 100 is configured to provide a voltage reference (U_{ref}) to the VSC (see Fig. 2) for controlling the VSC in a Static Synchronous Compensator, STATCOM, mode or an Enhanced STATCOM, ESTATCOM, mode, wherein the voltage reference (U_{ref}) is based at least on a phase angle of an internal voltage source, IVS, of the VSC, wherein the IVS phase angle (*ϕ_{IVS}*) is at least indicative of an amount of active power (P) being exchanged between the VSC and the electrical power system via the PCC. As illustrated in Fig. 1, the control device 100 comprises: a power control loop 110 configured to determine the IVS phase angle (*ϕ_{IVS}*) based at least on a feedforward damping of an energy parameter. The power control loop 110 is further configured to operate in a first mode corresponding to the STATCOM mode of the VSC, or operate in a second mode corresponding to the ESTATCOM mode of the VSC. When in the first mode, the power control loop (110) is configured to obtain a direct current, DC, link energy (ΔW_{DC}) as the energy parameter, wherein the DC link energy (ΔW_{DC}) is indicative of an amount of electrical energy being exchanged between a DC link energy source of the VSC and the electrical power system. When in the second mode, the power control loop (110) is configured to obtain an estimated energy (ΔW_{P}) as the energy parameter, wherein the estimated energy (ΔW_{P}) corresponds to an active power correction (ΔP) based at least on the active power (P), an active power reference (P_{ref}) for the active power (P), and an active power reference correction (ΔP_{ref}) based at least on an energy correction (ΔW), wherein the energy correction (ΔW) is based at least on the estimated energy (ΔW_{P}) and the direct current, DC, link energy (ΔW_{DC}).

In Fig. 1, the power control loop 110 is further configured to determine a phase angle correction (Δ*ϕ*) based on a difference between a source phase angle (*ϕ_{U_{S}}*) and an internal voltage source, IVS, phase angle (*ϕ_{IVS}*)*.*

The source phase angle (*ϕ_{U_{S}}*) is a phase angle of the electrical power system, and the IVS phase angle (*ϕ_{IVS}*) is based at least on a feedforward damping of the energy parameter.

The energy correction (ΔW) may be based at least on the estimated energy (ΔW_{P}) and the DC link energy (ΔW_{DC}) indicative of an amount of electrical energy being exchanged between the DC link energy source and the electrical power system.

Further in Fig. 1, the control device 100 is configured to control the VSC based at least on the phase angle correction (Δ*ϕ*).

In a non-limiting example, the active power reference (P_{ref}) may be set to zero to generalize. However, the active power reference (P_{ref}) may be set to a non-zero value to account for specific operating conditions of the VSC and the electrical power system.

The energy balancing circuit 112 may comprise additional components, such as filters, amplifiers, or signal conditioners, to process the energy correction (ΔW) and provide the active power reference correction (ΔPref). Furthermore, the control device 100 may be configured to receive external inputs, such as measurements of the electrical power system's frequency, voltage, or current, e.g., to adjust the active power reference (P_{ref}) accordingly. A current (at the PCC or elsewhere) may be measured by means of a current transformer, CT. A voltage (at the PCC or elsewhere) may be measured by means of a voltage transformer, VT. A frequency may be detected by waveform analysis of the current and/or the voltage, which waveform analysis may be performed by the control device or a separate frequency measuring device. The active power reference correction (ΔP_{ref}) may also be based on other factors, including but not limited to, the VSC's operating mode, the electrical power system's topology, or environmental conditions.

The control device 100 may further comprise a communication interface to receive and/or transmit data related to, for example, the active power reference (P_{ref}), the energy correction (ΔW), and/or the active power reference correction (ΔP_{ref}). The communication interface may be used to coordinate the operation of multiple VSCs connected to the same electrical power system and/or to receive commands from a control center.

The energy balancing circuit 112 may further be configured to handle faults or anomalies in the electrical power system, such as voltage dips or frequency deviations, by adjusting the active power reference correction (ΔP_{ref}) accordingly.

In a non-limiting example, the control device 100 may comprise a monitoring and/or logging system to track the performance of the VSC, the electrical power system, and/or the energy balancing circuit 112. The monitoring and/or logging system may, e.g., be used to identify trends, detect anomalies, and/or optimize the operation of the VSC and the electrical power system.

Further, as depicted in Fig. 1, the active power reference correction (ΔP_{ref}) is based on a difference between the DC link energy (ΔW_{DC}) and the energy correction (ΔW_{P}) scaled by an integral energy gain (k_{iw}).

The difference between the DC link energy (ΔW_{DC}) and the energy correction (ΔW_{P}) scaled by an integral energy gain (k_{iw}) may be calculated using various mathematical operations, including but not limited to, subtraction. The integral energy gain (k_{iw}) may be a fixed value, a tunable parameter, or a scheduled variable that depends on the operating conditions of the VSC and/or the electrical power system. The active power reference correction (ΔP_{ref}) may be provided via the energy balancing circuit 112 The energy balancing circuit 112 may comprise additional components, such as filters, e.g., to process the DC link energy (ΔW_{DC}) and the energy correction (ΔW_{P}) before calculating their difference.

The energy balancing circuit 112 may further be configured to account for non-linear effects, such as saturation or hysteresis, in the VSC or the electrical power system. This may, e.g., be achieved by using mathematical models to describe the non-linear behavior. Furthermore, the control device 100 may, for example, be configured to adapt to changes in the electrical power system's topology or operating conditions by adjusting the integral energy gain (k_{iw}) and the active power reference correction (ΔP_{ref}) accordingly.

In Fig. 1, the IVS phase angle (*ϕ_{IVS}*) is based on a proportional part (*ϕ_{IVS,p}*) of the IVS phase angle (*ϕ_{IVS}*) provided by a feedforward damping circuit 114, which feedforward damping circuit is configured to receive the energy parameter as input. In turn, the proportional part (*ϕ_{IVS,p}*) of the IVS phase angle (*ϕ_{IVS}*) is based on the energy parameter scaled by a proportional gain (k_{P}). In Fig. 1, the energy parameter depends on the mode of the power control loop 110. In the first mode, the energy parameter is the DC link energy (ΔW_{DC}), and in the second mode, the energy parameter is the estimated energy (Δ*W_{P}*)*.*

The proportional part (*ϕ_{IVS,p}*) of the IVS phase angle (*ϕ_{IVS}*) provided by the feedforward damping circuit 114 may be calculated using various mathematical operations, including but not limited to, multiplication. The feedforward damping circuit 114 may comprise additional components, such as filters, amplifiers, or signal conditioners, e.g., to process the energy parameter and provide the IVS phase angle (*ϕ_{IVS}*)*.*

The proportional gain (k_{P}) may, e.g., be a fixed value, a tunable parameter, or a scheduled variable that depends on the operating conditions of the VSC and/or the electrical power system. Additionally, the feedforward damping circuit 114 may be configured to account for non-linear effects, such as saturation and/or hysteresis, in the VSC and/or the electrical power system. This may, for example, be achieved by using mathematical models to describe the non-linear behavior.

Furthermore, the control device 100 may be configured to adapt to changes in the electrical power system's topology and/or operating conditions, e.g., by adjusting the proportional gain (k_{P}) and the IVS phase angle (*ϕ_{IVS}*) accordingly.

Additionally, in Fig. 1, the IVS phase angle (*ϕ_{IVS}*) is further based on an integral part (*ϕ_{IVS,i}*) of the IVS phase angle (*ϕ_{IVS}*)*.* The integral part (*ϕ_{IVS,i}*) of the IVS phase angle (*ϕ_{IVS}*) is here determined by an integral gain (kᵢ) followed by an energy integrator ( $\frac{1}{S}$).

The integral part (*ϕ_{IVS,i}*) of the IVS phase angle (*ϕ_{IVS}*) determined by the integral gain (kᵢ) followed by an energy integrator ( $\frac{1}{S}$) may be calculated using various mathematical operations, including but not limited to, integration, multiplication, and/or division. The integral gain (kᵢ) may be a fixed value, a tunable parameter, or a scheduled variable that depends on the operating conditions of the VSC and/or the electrical power system.

The energy integrator ( $\frac{1}{S}$) may be a numerical integrator, an analog integrator, or any other suitable integration method.

In Fig. 1, it is also illustrated that the integral part (*ϕ_{IVS,i}*) and the proportional part (*ϕ_{IVS,p}*) of the IVS phase angle (*ϕ_{IVS}*) are based on the estimated energy (ΔW_{P}) or directly on the DC link energy (ΔW_{DC}). In particular, in Fig. 1, the power control loop 110 comprises a switch 116.

In an example (not explicitly shown in the drawings), only the integral part (*ϕ_{IVS,i}*) or only the proportional part (*ϕ_{IVS,p}*) of the IVS phase angle (*ϕ_{IVS}*) is selectively based on the estimated energy (ΔW_{P}) or directly on the DC link energy (ΔW_{DC}). Hence, in such an example, the switch 116 may be connected to only the path of the proportional part (*ϕ_{IVS,p}*) of the IVS phase angle (*φ_{IVS}*) or only the path of the integral part (*ϕ_{IVS,i}*) of the IVS phase angle (*ϕ_{IVS}*)*.*

The switch 116 may, e.g., determine whether the integral and/or proportional part (*ϕ_{IVS,i}, ϕ_{IVS,p}*) of the IVS phase angle (*ϕ_{IVS}*) is to be based the estimated energy (ΔW_{P}) or directly on the DC link energy (ΔW_{DC}). In other words, the switch 116 allows the integral part (*ϕ_{IVS,i}*) and the proportional part (*ϕ_{IVS,p}*) of the IVS phase angle (*ϕ_{IVS}*) to be based on either of the estimated energy (ΔW_{P}) or the DC link energy (ΔW_{DC}).

In a sense, the switch 116 may be used to select between using the estimated energy (ΔW_{P}) or the DC link energy (ΔW_{DC}) to calculate the integral part (*ϕ_{IVS,i}*) and/or the proportional part (*ϕ_{IVS,p}*) of the IVS phase angle (*ϕ_{IVS}*) accordingly. This selection allows the control device 100 to operate in different modes, such as STATCOM or ESTATCOM mode. Specifically, the switch 116 enables the control device 100 to choose between using the estimated energy (ΔW_{P}) from power calculations, or directly using the DC link energy (ΔW_{DC}). In an example, the estimated energy (ΔW_{P}) may be chosen for better performance and/or to avoid introducing 2^{nd} order harmonics from the DC-link voltage.

The switch 116 may be implemented using various technologies, including but not limited to, mechanical switches, electronic switches, or software-based switches.

Although not shown in Fig. 1, the switch 116 may incorporate additional components, such as a signal conditioner to process the estimated energy (ΔW_{P}) and/or the DC link energy (ΔW_{DC}) before selecting between them.

Moreover, in Fig. 1, the IVS phase angle (*φ_{IVS}*) is based at least on a sum of the proportional part (*ϕ_{IVS,p}*) of the IVS phase angle (*ϕ_{IVS}*) and the integral part (*ϕ_{IVS,i}*) of the IVS phase angle (*ϕ_{IVS}*)*.*

In an example, the control device 100 may be configured to adapt to changes in the electrical power system's topology and/or operating conditions by adjusting the switch 116 and, thus, the integral part (*ϕ_{IVS,i}*) and/or the proportional part (*ϕ_{IVS,p}*) of the IVS phase angle (*ϕ_{IVS}*) accordingly.

Further, in Fig. 1, the control device 100 comprises an alternating current voltage controller, AVC, 120 configured to regulate a reactive AC voltage output of the VSC.

The AVC 120 may be configured to regulate the AC voltage output of the VSC using various control strategies, including but not limited to, integral control, virtual admittance (***Yᵥ***) based control, proportional-integral-derivative (PID) control, state-space control, and/or model predictive control. The virtual admittance (***Yᵥ***) may be part of the AVC 120. The virtual admittance (***Yᵥ***) may, e.g., be an integral part of the AVC 120. The AVC 120 may also comprise additional components, such as filters, amplifiers, or signal conditioners, to process the AC voltage output and provide a corrected voltage reference. The AVC may (indirectly) control reactive power being exchanged between the VSC and the electrical power system via the PCC by regulating the AC voltage output.

The AVC 120 may be configured to account for non-linear effects, such as saturation or hysteresis, in the VSC or the electrical power system. This may, e.g., be achieved mathematical models to describe the non-linear behavior. Furthermore, the control device 100 may be configured to adapt to changes in the electrical power system's topology and/or operating conditions by adjusting the AVC 120 and the AC voltage output accordingly.

The control device 100 may also be configured to coordinate the operation of multiple VSCs connected to the same electrical power system by adjusting the AVC 120 and the AC voltage output accordingly.

Fig. 2 shows a schematic block diagram of a grid forming control scheme. Here, the power control loop 110 and AVC 120, e.g., as described in relation to Fig. 1, are communicatively connected to an IVS 130. An output of the IVS 130 is then additively combined with a source voltage (U_{S}).

The output of the IVS 130 may be a sinusoidal voltage waveform, a pulse-width modulated (PWM) signal, or any other suitable voltage waveform. Additionally, the source voltage (U_{S}) may be measured using various sensors, including but not limited to, voltage transformers, electronic voltage transducer, and/or hall effect sensors. Alternatively, or additionally, a capacitive voltage transducer (CVT) may be used.

Although not shown in detail in the drawings, the AVC 120 may provide a magnitude voltage (U_{IVS}) based on a reactive power (Q) measured at the PCC and a reactive power reference (Q_{ref}) for the reactive power (Q).

The reactive power (Q) measured at the PCC may be calculated using various methods, including but not limited to, processing the voltage and current measurements from transducers, such as voltage and current transducers, e.g., through filters such as phase-locked loop (PLL) filters or positive-negative (PN) sequence filters, to extract the positive sequence components. Other exemplary methods may involve instantaneous power theory, RMS power theory, or fundamental frequency power theory. The reactive power reference (Q_{ref}) for the reactive power (Q) may be set to a fixed value, a tunable parameter, or a scheduled variable that depends on the operating conditions of the VSC and the electrical power system.

Additionally, although not shown in the drawings, the magnitude voltage (U_{IVS}) may be filtered using a filter, e.g., to remove noise and/or harmonics.

Furthermore, the control device 100 may be configured to adapt to changes in the electrical power system's topology and/or operating conditions by adjusting the reactive power reference (Q_{ref}), the magnitude voltage (U_{IVS}), and the AVC 120 accordingly.

Further, the control device 100 may be configured to determine an electromotive force, EMF, based on the IVS phase angle (*ϕ_{IVS}*) and the magnitude voltage (U_{IVS}).

The voltage reference (U_{ref}) may, in turn, further be based on the EMF and a virtual admittance (***Yᵥ***) determined by a virtual admittance controller, VAC, 140, e.g. as depicted in Fig. 2.

The voltage reference (U_{ref}) may further be based on a current limit of a current between the VSC and the electrical power system.

Hence, the control device 100 may comprise a current limiting unit (not shown in the drawings) configured to apply a current limitation to prevent the VSC from being operated above a maximum allowed current threshold. This may facilitate current limitation of the VSC, thereby protecting sensitive power electronics of the VSC without resorting to tripping functionality that may compromise the VSC's grid-forming capability. As a non-limiting example, the maximum allowed current threshold may be specified by a current limit reference. The current limiting unit may be configured to receive said current reference and provide a processed current reference to the current controller. The processed current reference may be an unadjusted current reference, or an adjusted current reference based on the current limit reference.

The current limit may, e.g., be adjusted based on various operating conditions of the VSC and/or the electrical power system. As a non-limiting example, the current limit may be based on a rated current for the VSC, a rated power for the VSC, a target current at the PCC or a target power to be exchanged via the PCC based on an operating condition, such as a fault condition of the electrical power system or the VSC. Alternatively, or in combination, the current limit may for example be based on any one or more of active power, reactive power, energy storage power limit, energy storage current limit, energy storage voltage limit, and main component thermal limit.

Although not explicitly depicted in the drawings, a grid-forming converter, configured to be electrically connected to an electrical power system via a PCC, and a control device 100, e.g., as described in relation to Fig. 1, may constitute or form part of a power supporting system.

In an example, the power supporting system may comprise a plurality of VSCs. The control device 100 may, e.g., be configured to control the plurality of VSC individually or at least partly in unison. A VSC may be electrically connected or connectable to a renewable energy source, such as a solar farm or a wind farm.

The power supporting system may comprise multiple grid-forming converters, each connected to a separate electrical power system via a PCC. Hence, the control device 100 may be configured to coordinate the operation of multiple grid-forming converters.

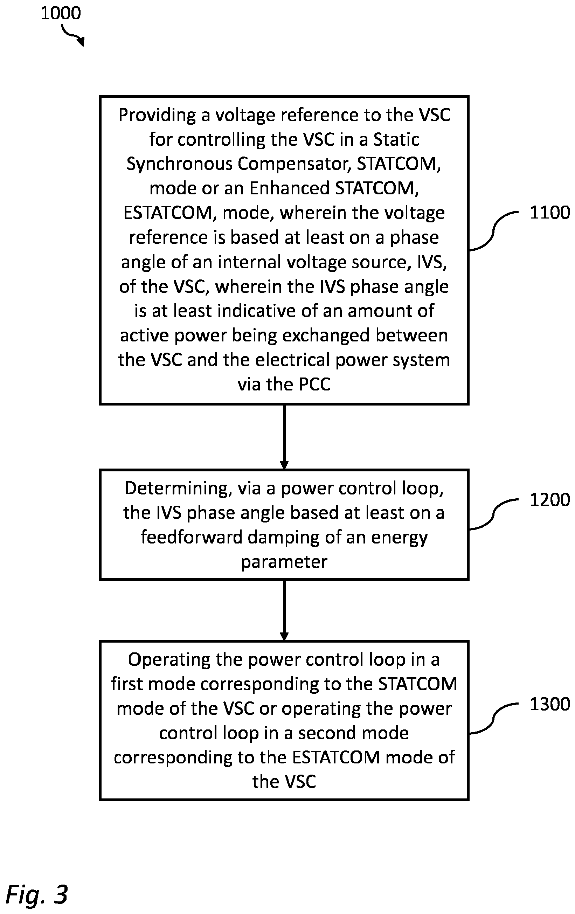

Fig. 3 depicts a flowchart of a method 1000 for controlling a VSC electrically connected to an electrical power system via a PCC.

In Fig. 3, the method 1000 comprises:
providing 1100 a voltage reference (U_{ref}) to the VSC for controlling the VSC in a Static Synchronous Compensator, STATCOM, mode or an Enhanced STATCOM, ESTATCOM, mode, wherein the voltage reference (U_{ref}) is based at least on a phase angle of an internal voltage source, IVS, of the VSC, wherein the IVS phase angle (*ϕ_{IVS}*) is at least indicative of an amount of active power (P) being exchanged between the VSC and the electrical power system via the PCC;
determining 1200, via a power control loop, the IVS phase angle (*φ_{IVS}*) based at least on a feedforward damping of an energy parameter; and
operating 1300 the power control loop in a first mode corresponding to the STATCOM mode of the VSC or operating the power control loop in a second mode corresponding to the ESTATCOM mode of the VSC.

Further, although not shown in Fig. 3, when in the first mode, the power control loop obtains a direct current, DC, link energy (ΔW_{DC}) as the energy parameter, wherein the DC link energy (ΔW_{DC}) is indicative of an amount of electrical energy being exchanged between a DC link energy source of the VSC and the electrical power system. In addition, when in the second mode, the power control loop obtains an estimated energy (ΔW_{P}) as the energy parameter, wherein the estimated energy (ΔW_{P}) corresponds to an active power correction (ΔP) based at least on the active power (P), an active power reference (P_{ref}) for the active power (P), and an active power reference correction (ΔP_{ref}) based at least on an energy correction (ΔW), wherein the energy correction (ΔW) is based at least on the estimated energy (ΔW_{P}) and the direct current, DC, link energy (ΔW_{DC}).

Furthermore, the power control loop 110 may obtain an active power reference correction (ΔP_{ref}) via an energy balancing circuit 112, the energy balancing circuit 112 may determine the active power reference correction (ΔP_{ref}) based at least on the energy correction (ΔW).

Moreover, although not stated in Fig. 3, the power control loop 110 may obtain an active power reference correction (ΔP_{ref}) via an energy balancing circuit, the energy balancing circuit determining the active power reference correction (ΔP_{ref}) based at least on an energy correction (ΔW).

The power control loop 110 may determine an active power correction (ΔP) based at least on an active power (P), an active power reference (P_{ref}), and the active power reference correction (ΔP_{ref});

The power control loop 110 may determine an estimated energy (ΔW_{P}) corresponding to the active power correction (ΔP).

The power control loop 110 may determine a phase angle correction (Δ*ϕ*) based on a difference between a source phase angle (*ϕ_{U_{S}}*) and an internal voltage source, IVS, phase angle (*ϕ_{IVS}*)*,* wherein the source phase angle (*ϕ_{U_{S}}*) is a phase angle of the electrical power system, and the IVS phase angle (*ϕ_{IVS}*) is based at least on a feedforward damping of the estimated energy (ΔW_{P}).

The power control loop 110 may control the VSC based at least on the phase angle correction (Δ*ϕ*).

It is to be appreciated that the steps of the method 1000 described herein may be performed in any suitable order, without departing from the scope of the invention.

Further, although not shown in the drawings, a computer-readable storage medium comprising instructions which, when executed by a computer, cause the computer to carry out the method 1000, e.g., as described in relation to Fig. 3, is provided.

In the above the disclosure has mainly been described with reference to a limited number of examples. However, as is readily appreciated by a person skilled in the art, other examples than the ones disclosed above are equally possible within the scope of the disclosure, as defined by the appended claims.

## Claims

1. A control device (100) for a voltage source converter, VSC, electrically connected to an electrical power system via a point of common connection, PCC, wherein the control device (100) is configured to provide a voltage reference (U_{ref}) to the VSC for controlling the VSC in a Static Synchronous Compensator, STATCOM, mode or an Enhanced STATCOM, ESTATCOM, mode, wherein the voltage reference (U_{ref}) is based at least on a phase angle of an internal voltage source, IVS, of the VSC, wherein the IVS phase angle (*ϕ_{IVS}*) is at least indicative of an amount of active power (P) being exchanged between the VSC and the electrical power system via the PCC, the control device (100) comprising:
a power control loop (110) configured to determine the IVS phase angle (*ϕ_{IVS}*) based at least on a feedforward damping of an energy parameter,
wherein the power control loop (110) is further configured to operate in a first mode corresponding to the STATCOM mode of the VSC, or operate in a second mode corresponding to the ESTATCOM mode of the VSC,
wherein in the first mode the power control loop (110) is configured to obtain a direct current, DC, link energy (ΔW_{DC}) as the energy parameter, wherein the DC link energy (ΔW_{DC}) is indicative of an amount of electrical energy being exchanged between a DC link energy source of the VSC and the electrical power system,
wherein in the second mode the power control loop (110) is configured to obtain an estimated energy (ΔW_{P}) as the energy parameter, wherein the estimated energy (ΔW_{P}) corresponds to an active power correction (ΔP) based at least on the active power (P), an active power reference (P_{ref}) for the active power (P), and an active power reference correction (ΔP_{ref}) based at least on an energy correction (ΔW), wherein the energy correction (ΔW) is based at least on the estimated energy (ΔW_{P}) and the direct current, DC, link energy (ΔW_{DC}).

2. The control device (100) according to claim 1, wherein the active power reference correction (ΔP_{ref}) is based at least on a difference between the DC link energy (ΔW_{DC}) and the energy correction (ΔW_{P}) scaled by an integral energy gain (k_{iw}).

3. The control device (100) according to claim 1 or 2, wherein the IVS phase angle (*φ_{IVS}*) is based at least on a proportional part (*ϕ_{IVS,p}*) of the IVS phase angle (*ϕ_{IVS}*) provided by a feedforward damping circuit (114), which feedforward damping circuit is configured to receive the energy parameter as input.

4. The control device (100) according to any one of claims claim 1-3, wherein the proportional part (*ϕ_{IVS,p}*) of the IVS phase angle (*ϕ_{IVS}*) is based at least on the energy parameter scaled by a proportional gain (k_{P}).

5. The control device (100) according to any one of claims 1-4, wherein the IVS phase angle (*ϕ_{IVS}*) is further based on an integral part (*ϕ_{IVS,i}*) of the IVS phase angle (*ϕ_{IVS}*)*.*

6. The control device (100) according to claim 5, wherein the integral part (*ϕ_{IVS,i}*) of the IVS phase angle (*ϕ_{IVS}*) is determined by an integral gain (kᵢ) followed by an energy integrator ( $\frac{1}{S}$).

7. The control device (100) according to claim 5 or 6, wherein the IVS phase angle (*ϕ_{IVS}*) is based at least on a sum of the proportional part (*ϕ_{IVS,p}*) of the IVS phase angle (*ϕ_{IVS}*) and the integral part (*ϕ_{IVS,i}*) of the IVS phase angle (*ϕ_{IVS}*)*.*

8. The control device (100) according to any one of claims 1-7, wherein the control device (100) further comprises an alternating current voltage controller, AVC, (120) configured to regulate an AC voltage output of the VSC.

9. The control device (100) according to claim 8, wherein the AVC (120) provides a magnitude voltage (U_{IVS}) based on a reactive power (Q) measured at the PCC and a reactive power reference (Q_{ref}) for said reactive power (Q).

10. The control device (100) according to claim 9, wherein the control device (100) is further configured to determine an electromotive force, EMF, based on the IVS phase angle (*ϕ_{IVS}*) and the magnitude voltage (U_{IVS}).

11. The control device (100) according to claim 10, wherein the voltage reference (U_{ref}) is further based on the EMF and a virtual admittance (***Yᵥ***) determined by a virtual admittance controller, VAC, (140).

12. The control device (100) according to any one of claims 1-11, wherein the voltage reference (U_{ref}) is further based on a current limit of a current between the VSC and the electrical power system.

13. A power supporting system comprising:
a grid-forming converter configured to be electrically connected to an electrical power system via a point of common connection, PCC, and
a control device (100) according to any one of claims 1-12.

14. A method (1000) for controlling a voltage source converter, VSC, electrically connected to an electrical power system via a point of common connection, PCC, the method (1000) comprising:
providing (1100) a voltage reference (U_{ref}) to the VSC for controlling the VSC in a Static Synchronous Compensator, STATCOM, mode or an Enhanced STATCOM, ESTATCOM, mode, wherein the voltage reference (U_{ref}) is based at least on a phase angle of an internal voltage source, IVS, of the VSC, wherein the IVS phase angle (*ϕ_{IVS}*) is at least indicative of an amount of active power (P) being exchanged between the VSC and the electrical power system via the PCC;
determining (1200), via a power control loop, the IVS phase angle (*ϕ_{IVS}*) based at least on a feedforward damping of an energy parameter; and
operating (1300) the power control loop in a first mode corresponding to the STATCOM mode of the VSC or operating the power control loop in a second mode corresponding to the ESTATCOM mode of the VSC,
wherein in the first mode the power control loop obtains a direct current, DC, link energy (ΔW_{DC}) as the energy parameter, wherein the DC link energy (ΔW_{DC}) is indicative of an amount of electrical energy being exchanged between a DC link energy source of the VSC and the electrical power system,
wherein in the second mode the power control loop obtains an estimated energy (ΔW_{P}) as the energy parameter, wherein the estimated energy (ΔW_{P}) corresponds to an active power correction (ΔP) based at least on the active power (P), an active power reference (P_{ref}) for the active power (P), and an active power reference correction (ΔP_{ref}) based at least on an energy correction (ΔW), wherein the energy correction (ΔW) is based at least on the estimated energy (ΔW_{P}) and the direct current, DC, link energy (ΔW_{DC}).

15. A computer-readable storage medium comprising instructions which, when executed by a computer, cause the computer to carry out the method (1000) according claim 14.
